# EUROPÄISCHE PATENTSCHRIFT

(11) **EP 4 520 565 B1**
(45) Veröffentlichungstag und Bekanntmachung des Hinweises auf die Patenterteilung: **14.10.2026**
(21) Anmeldenummer: 24192541.1
(22) Anmeldetag: 02.08.2024
(51) Int. Cl.: B60K 1/04, B60K 1/00, H01M 50/249, H01M 50/262

(54) **BATTERIEELEKTRISCHES SYSTEM FÜR EIN NUTZFAHRZEUG**
BATTERY-ELECTRIC SYSTEM FOR A UTILITY VEHICLE
SYSTÈME ÉLECTRIQUE DE BATTERIE POUR VÉHICULE UTILITAIRE

(30) Priorität: 08.09.2023 DE 102023124199
(43) Veröffentlichungstag der Anmeldung: 12.03.2025
(73) Patentinhaber: Deere & Company, Moline, IL 61265 (US)
(72) Erfinder: BROCKE,, STEFAN, 68163 Mannheim (DE)
(74) Vertreter: Dehnhardt, Florian Christopher

(56) Entgegenhaltungen:
- EP-A2- 1 700 766
- US-A1- 2023 068 251
- US-B2- 10 811 647

## Beschreibung

Die Erfindung betrifft ein batterieelektrisches System für ein Nutzfahrzeug, insbesondere einen landwirtschaftlichen Traktor. Batterieelektrische Systeme zum Betrieb von Fahrzeugen gewinnen im Hinblick auf eine Vermeidung der bei der Verbrennung fossiler Treibstoffe entstehenden CO₂-Emissionen gerade im Automobilbereich zunehmend an Bedeutung. Im Vergleich zum Automobilbereich ist der Leistungsbedarf von Nutzfahrzeugen indes um ein Vielfaches höher. Dies gilt vor allem für landwirtschaftliche Traktoren, da hier über mehrere Stunden unterbrechungsfrei Arbeiten mit erhöhtem Zugkraftbedarf zu verrichten sind. Beispielhaft sei hier das Umpflügen schwerer Ackerböden erwähnt. In der Regel steht der für den Einsatz eines batterieelektrischen Systems entsprechender Energiekapazität erforderliche Bauraum aufgrund funktioneller Rahmenbedingungen, wie dem Vorhandensein notwendiger Betriebs- bzw. Arbeitsaggregate oder vergleichsweise großvolumiger Reifen, im Bereich eines Motorraums oder eines tragenden Chassis des landwirtschaftlichen Traktors nicht zur Verfügung.

US 2023/068251 A1 offenbart eine Batterieanordnung für ein Zweirad.

Es ist daher Aufgabe der vorliegenden Erfindung, ein an die Verwendung in einem Nutzfahrzeug, insbesondere einem landwirtschaftlichen Traktor angepasstes batterieelektrisches System anzugeben.

Diese Aufgabe wird durch ein batterieelektrisches System für ein Nutzfahrzeug, insbesondere einen landwirtschaftlichen Traktor, mit den Merkmalen des Patentanspruchs 1 gelöst.

Das batterieelektrische System für ein Nutzfahrzeug, insbesondere einen landwirtschaftlichen Traktor, umfasst eine Radfelge sowie wenigstens eine in einem Leer- bzw. Freibereich der Radfelge untergebrachte torus- bzw. ringförmige Batterieanordnung, wobei die wenigstens eine torusförmige Batterieanordnung in einem zur Anbringung an einer Fahrzeugachse ausgebildeten Befestigungsbereich eine Schnittstelle zur lösbaren Herstellung einer drehungsunabhängigen elektrischen und fluidischen Kommunikationsverbindung mit einem fahrzeugseitigen Betriebssystem aufweist.

Das erfindungsgemäße batterieelektrische System macht sich den Umstand zunutze, dass die Räder von Nutzfahrzeugen einen vergleichsweise großen Durchmesser aufweisen. Dies gilt in besonderem Maße für die Bereifung und damit die Radfelgen landwirtschaftlicher Traktoren. So ist bei Traktoren der Serie 7R des Herstellers John Deere gemäß Spezifikation eine maximale Reifengröße von 170 cm (vorne) bzw. 215 cm (hinten) angegeben. Durch Unterbringung der torusförmigen Batterieanordnung innerhalb des ansonsten ungenutzten Leer- bzw. Freibereichs der Radfelge ist eine besonders platzsparende Integration des batterieelektrischen Systems im Nutzfahrzeug möglich. Das batterieelektrische System kann dabei zur Kapazitätserweiterung eines Hauptbatteriesystems des Nutzfahrzeugs dienen, aber auch alleiniges Hauptbatteriesystem für den Fall sein, dass das Nutzfahrzeug einen Hybridantrieb aufweist.

Bei der über die Schnittstelle mit dem Betriebssystem hergestellten elektrischen und fluidischen Kommunikationsverbindung handelt es sich beispielsweise um eine elektrische Leistungsübertragungsverbindung, eine Flüssigkeitsverbindung mit einem Kühlmittelkreislauf und eine elektrische Verbindung zur Datenkommunikation. Dementsprechend weist das fahrzeugseitige Betriebssystem neben einer zum Betrieb des Kühlmittelkreislaufs vorgesehenen Flüssigkeitskühleinrichtung ein Energieversorgungs- und/oder Lademanagementsystem auf, das neben der Koordination eines Stromentnahme- bzw. Ladevorgangs insbesondere der Temperaturüberwachung und Ladezustandskontrolle des batterieelektrischen Systems dient.

Insbesondere weist die Schnittstelle einen ersten Schnittstellenanschluss im Bereich eines zentralen Felgentellers der Radfelge auf, wobei sich an der Fahrzeugachse, genauer gesagt an einer zur Anbringung der Radfelge vorgesehenen Radnabe ein komplementärer zweiter Schnittstellenanschluss befindet, der seinerseits mit einer an der Fahrzeugachse vorgesehenen Drehdurchführung in Verbindung steht. Hierbei werden beim Anflanschen des Felgentellers an die Radnabe die beiden Schnittstellenanschlüsse miteinander elektrisch bzw. flüssigkeitsdicht verbunden, sodass letztlich über die Drehdurchführung eine drehungsunabhängige elektrische bzw. fluidische Kommunikationsverbindung mit dem fahrzeugseitigen Betriebssystem hergestellt wird.

Vorteilhafte Weiterbildungen des erfindungsgemäßen batterieelektrischen Systems gehen aus den Unteransprüchen hervor. Vorzugsweise besteht die wenigstens eine torusförmige Batterieanordnung aus einer Aneinanderreihung einer Vielzahl von als Ringsegmente ausgebildeten Batteriemodulen. Jedes Batteriemodul besteht aus einem Modulkörper, innerhalb dessen eine Vielzahl von Batteriezellen untergebracht ist. Die Batteriezellen sind beispielsweise vom zylindrischen, prismatischen oder Pouch-Typ. Aufgrund ihrer Leistungsdichte werden zylindrische Batteriezellen bevorzugt, wobei diese innerhalb des Modulkörpers matrixartig angeordnet bzw. miteinander verschaltet sind und im Betrieb vorzugsweise mit nichtleitender Kühlflüssigkeit, die dem Modulkörper bzw. einem darin vorgesehenen Flüssigkeitsleitsystem über die fluidische Kommunikationsverbindung seitens des fahrzeugseitigen Betriebssystems zugeführt wird, umspült werden. Die einzelnen Batteriemodule sind zusätzlich innerhalb eines Modulgehäuses flüssigkeitsdicht gekapselt. Das Modulgehäuse kann aus im Spritzgussverfahren verarbeiteten Kunststoff bestehen.

Dabei ist es möglich, dass die Batteriemodule an ihren radial zugewandten Stirnseiten komplementär ausgebildete Modulschnittstellen zur gegenseitigen Montage sowie zur Herstellung einer elektrischen und fluidischen Kommunikationsverbindung untereinander aufweisen. Durch Lösen der Modulschnittstellen ist ein unkomplizierter Austausch gegebenenfalls defekter Batteriemodule möglich. Hierbei können diese als Steck-Rast-Verbinder ausgebildet sein und mittels mechanischer Montagemittel gesichert werden. Jede der Modulschnittstellen umfasst eine Anordnung aus Steckkontakten zur elektrischen Leistungs- und/oder Datenübertragung sowie aus flüssigkeitsdichten Kupplungselementen zur Übertragung der in dem Kühlmittelkreislauf zirkulierenden Kühlflüssigkeit.

Im Hinblick auf eine weitere Vergrößerung der Ladekapazität des batterieelektrischen Systems kann vorgesehen sein, dass entlang der Radfelgenachse, also entlang ihrer axialen Erstreckung mindestens zwei torusförmige Batterieanordnungen nebeneinander in Form eines Batteriestapels angeordnet sind, wobei diese komplementär ausgebildete Batterieschnittstellen zur Herstellung einer elektrischen und fluidischen Kommunikationsverbindung untereinander aufweisen. Die Batterieschnittstellen können ähnlich den Modulschnittstellen als Steck-Rast-Verbinder ausgebildet sein und mittels zusätzlicher mechanischer Montagemittel gesichert werden. Jede der Batterieschnittstellen umfasst ihrerseits eine Anordnung aus Steckkontakten zur elektrischen Leistungs- und/oder Datenübertragung sowie aus flüssigkeitsdichten Kupplungselementen zur Übertragung der in dem Kühlmittelkreislauf zirkulierenden Kühlflüssigkeit.

Die Modul- bzw. Batterieschnittstellen ermöglichen neben einer Einbindung in den Kühlmittelkreislauf bzw. der Herstellung einer elektrischen Verbindung mit dem Energieversorgungsund/oder Lademanagementsystem des batterieelektrischen Systems insbesondere auch einen Datenaustausch der Batteriemodule bzw. der torusförmigen Batterieanordnungen untereinander.

Bezüglich der Unterbringung der wenigstens einen torusförmigen Batterieanordnung sind nun verschiedene Möglichkeiten denkbar. So besteht zunächst die Möglichkeit, dass die wenigstens eine torusförmige Batterieanordnung entlang eines Außenumfangs der Radfelge, insbesondere eines von zugehörigen Felgenhörnern umgrenzten Felgenbetts, das der Montage eines Fahrzeugreifens dient, verläuft. Bei dem zur Unterbringung der wenigstens einen torusförmigen Batterieanordnung genutzten Leer- bzw. Freibereich handelt es sich in diesem Fall um ein durch das Felgenbett bzw. einen darauf montierten Fahrzeugreifen umgrenztes Reifenluftvolumen.

Andererseits kann die wenigstens eine torusförmige Batterieanordnung auch entlang eines Innenumfangs der Radfelge verlaufen und auf diese Weise den durch einen Felgenkranz radial umgrenzten Leer- bzw. Freibereich innerhalb der Radfelge nutzen. Die wenigstens eine torusförmige Batterieanordnung ist in diesem Fall entweder am Felgenkranz und/oder an dem damit verbundenen bzw. einstückig ausgebildeten zentralen Felgenteller montiert, der der Anbringung der Radfelge an der Fahrzeugachse bzw. der davon umfassten Radnabe dient.

Hierbei kann vorgesehen sein, dass die wenigstens eine torusförmige Batterieanordnung entlang eines Innenumfangs der Radfelge derart angeordnet ist, dass diese für die Zwecke eines späteren Ausbaus bzw. Austauschs von außen zugänglich ist.

Des Weiteren ist es denkbar, dass ein Systemgehäuse der wenigstens einen torusförmigen Batterieanordnung zugleich integraler Bestandteil einer tragenden Felgenstruktur ist. Das Systemgehäuse besteht wie auch der übrige Felgenkörper aus Stahlblech, das im Tiefzugverfahren geformt ist. Ist die wenigstens eine torusförmige Batterieanordnung entlang eines Außenumfangs der Radfelge angeordnet, so kann das das Felgenbett umspannende Systemgehäuse zugleich als stützender Ring für den Fall eines defektbedingt auftretenden Reifendruckverlusts dienen (sog. Runflat-System).

Um auch hier einen späteren Ausbau bzw. Austausch der wenigstens einen torusförmigen Batterieanordnung zu ermöglichen, kann das Systemgehäuse abnehmbar am Felgenkörper montiert sein.

Das erfindungsgemäße batterieelektrische System für ein Nutzfahrzeug wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine perspektivische Schnittansicht eines an einer Fahrzeugachse eines landwirtschaftlichen Traktors vorgesehenen erfindungsgemäßen batterieelektrischen Systems mit entlang eines Innenumfangs einer Radfelge verlaufenden torusförmigen Batterieanordnungen,
- Fig. 2: eine der in Fig. 1 wiedergegebenen torusförmigen Batterieanordnungen in ausgebautem Zustand,
- Fig. 3: ein von der torusförmigen Batterieanordnung in Fig. 2 umfasstes Batteriemodul mit einer Vielzahl von zylindrischen Batteriezellen,
- Fig. 4: eine erste Variante des in Fig. 1 dargestellten batterieelektrischen Systems, bei der die torusförmigen Batterieanordnungen zusätzlich von einem schützenden Systemgehäuse umgeben sind, und
- Fig. 5: eine zweite Variante des in Fig. 1 dargestellten batterieelektrischen Systems mit entlang eines Außenumfangs der Radfelge verlaufenden torusförmigen Batterieanordnungen, wobei sich diese ebenfalls innerhalb eines schützenden Systemgehäuses befinden.

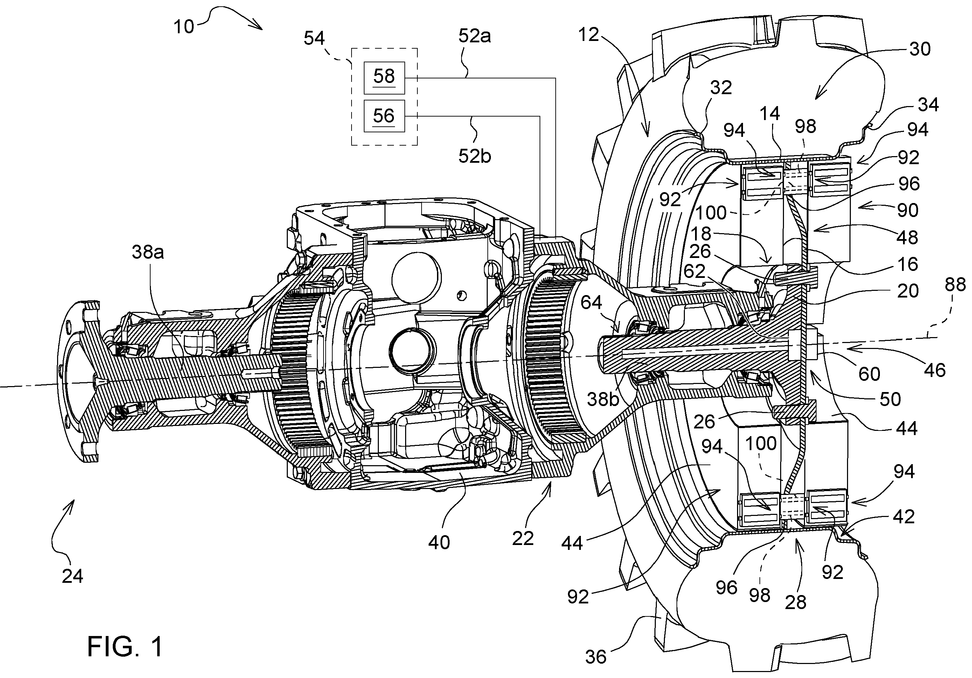

Fig. 1 zeigt in perspektivischer Schnittansicht ein Ausführungsbeispiel des erfindungsgemäßen batterieelektrischen Systems für ein als landwirtschaftlicher Traktor ausgebildetes Nutzfahrzeug.

Das batterieelektrische System 10 umfasst eine Radfelge 12 mit einem Felgenkranz 14 sowie einem damit verbundenen bzw. einstückig ausgebildeten zentralen Felgenteller 16, der in einem Befestigungsbereich 18 an einer Radnabe 20 einer Fahrzeugachse 22 des (nicht näher wiedergegebenen) landwirtschaftlichen Traktors 24 mittels mehrerer Schraubbolzen 26 angebracht ist. Ein entlang eines Außenumfangs 28 des Felgenkranzes 14 vorgesehenes Felgenbett 30 ist von gegenüberliegenden und parallel zueinander verlaufenden Felgenhörnern 32, 34 umgrenzt und dient der Montage eines zugehörigen Fahrzeugreifens 36.

Beispielgemäß handelt es sich bei der Fahrzeugachse 22 um eine der beiden angetriebenen Hinterachsen 38a, 38b des landwirtschaftlichen Traktors 24, wobei sich die Hinterachsen 38a, 38b beidseits eines Differentialgehäuses 40 nach außen erstrecken. Aus Gründen der Übersichtlichkeit ist das batterieelektrische System 10 ausschließlich für die rechte Hinterachse 38a dargestellt, tatsächlich ist dieses an der linken Hinterachse 38b gleichermaßen vorhanden.

Wie ferner in Fig. 1 zu erkennen ist, ist auf jeder der beiden Seiten des Felgentellers 16 jeweils entlang eines Innenumfangs 42 der Radfelge 12 eine torusförmige Batterieanordnung 44 in einem durch den Felgenkranz 14 radial umgrenzten Leer- bzw. Freibereich 46 untergebracht. Die beiden torusförmigen Batterieanordnungen 44 sind vorliegend am Felgenteller 16 montiert, zusätzlich oder alternativ ist eine Montage am Felgenkranz 14 vorgesehen. Mit anderen Worten bildet der Felgenteller 16 bzw. Felgenkranz 14 einen Montageträger 48 für die beiden torusförmigen Batterieanordnungen 44, wobei diese an dem Montageträger 48 mittels geeigneter Befestigungselemente (nicht gezeigt) lösbar angebracht sind. Hierbei sind die torusförmigen Batterieanordnungen 44 derart entlang des Innenumfangs 42 der Radfelge 12 angeordnet, dass diese für die Zwecke eines späteren Ausbaus bzw. Austauschs an der Radfelge 12 von außen zugänglich sind und sich nach Lösen bzw. Entfernen der Befestigungselemente von dem Montageträger 48 abnehmen lassen.

Durch Unterbringung der torusförmigen Batterieanordnungen 44 innerhalb des ansonsten ungenutzten Leer- bzw. Freibereichs 46 der Radfelge 12 ist eine besonders platzsparende Integration des batterieelektrischen Systems 10 im landwirtschaftlichen Traktor 24 möglich. Das batterieelektrische Systems 10 dient dabei zur Kapazitätserweiterung eines Hauptbatteriesystems des landwirtschaftlichen Traktors 24. Alternativ ist dieses alleiniges Hauptbatteriesystem für den Fall, dass der landwirtschaftliche Traktor 24 einen Hybridantrieb aufweist.

Des Weiteren ist in dem zur Anbringung an der Fahrzeugachse 22 ausgebildeten Befestigungsbereich 18 der Radfelge 12 eine Schnittstelle 50 zur lösbaren Herstellung einer drehungsunabhängigen elektrischen und fluidischen Kommunikationsverbindung 52a, 52b zwischen den torusförmigen Batterieanordnungen 44 und einem fahrzeugseitigen Betriebssystem 54 vorgesehen. Bei der über die Schnittstelle 50 mit dem fahrzeugseitigen Betriebssystem 54 hergestellten elektrischen und fluidischen Kommunikationsverbindung 52a, 52b handelt es sich beispielsgemäß um eine elektrische Leistungsübertragungsverbindung, eine Flüssigkeitsverbindung mit einem Kühlmittelkreislauf und eine elektrische Verbindung zur Datenkommunikation. Dementsprechend weist das fahrzeugseitige Betriebssystem 54 neben einer zum Betrieb des Kühlmittelkreislaufs vorgesehenen Flüssigkeitskühleinrichtung 56 ein Energieversorgungsund/oder Lademanagementsystem 58 auf, das neben der Koordination eines Stromentnahme- bzw. Ladevorgangs insbesondere der Temperaturüberwachung und Ladezustandskontrolle des batterieelektrischen Systems 10 dient.

Genauer gesagt weist die Schnittstelle 50 einen ersten Schnittstellenanschluss 60 im Bereich des Felgentellers 16 der Radfelge 12 auf, wobei sich an der Fahrzeugachse 22, genauer gesagt an der zur Anbringung der Radfelge 12 vorgesehenen Radnabe 20 ein komplementärer zweiter Schnittstellenanschluss 62 befindet, der seinerseits mit einer an der Fahrzeugachse 22 vorgesehenen Drehdurchführung 64 in Verbindung steht. Hierbei werden beim Anflanschen des Felgentellers 16 an die Radnabe 20 die beiden Schnittstellenanschlüsse 60, 62 miteinander elektrisch bzw. flüssigkeitsdicht verbunden, sodass letztlich über die Drehdurchführung 64 eine drehungsunabhängige elektrische bzw. fluidische Kommunikationsverbindung 52a, 52b mit dem fahrzeugseitigen Betriebssystem 54 hergestellt wird.

Der Aufbau derartiger Drehdurchführungen ist grundsätzlich aus dem einschlägigen Stand der Technik bekannt. Insofern soll daher auf eine Erläuterung weiterer Einzelheiten verzichtet werden.

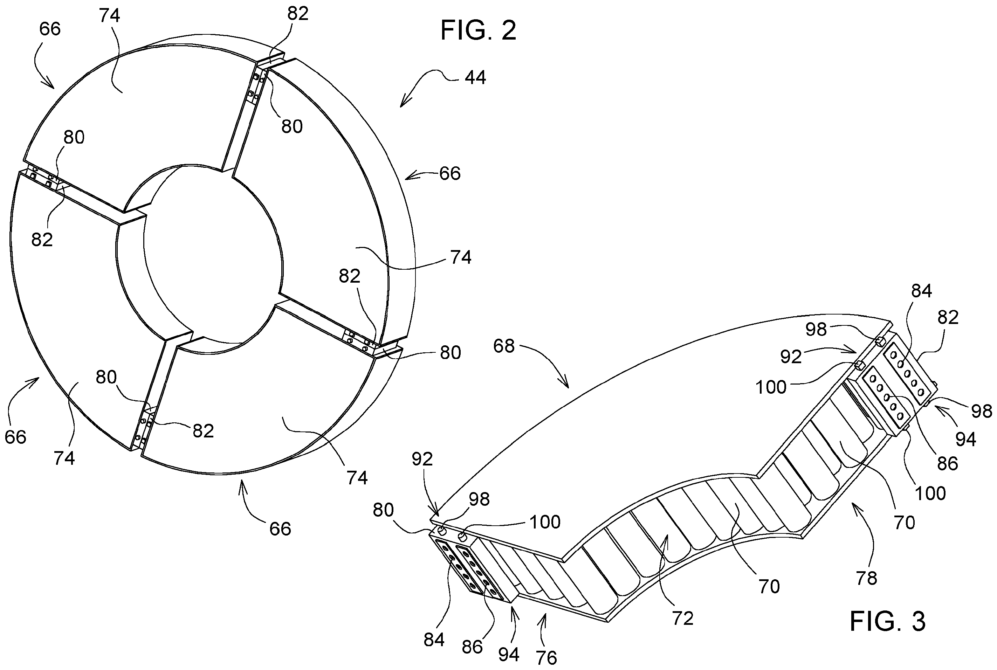

In Fig. 2 ist eine der beiden torusförmigen Batterieanordnungen 44 in ausgebautem Zustand wiedergegeben. Wie zu erkennen ist, besteht jede der torusförmigen Batterieanordnungen 44 aus einer Aneinanderreihung einer Vielzahl von als Ringsegmente ausgebildeten Batteriemodulen 66. Entsprechend dem in Fig. 3 wiedergegebenen geöffneten Zustand besteht jedes Batteriemodul 66 aus einem Modulkörper 68 (siehe Fig. 3), innerhalb dessen eine Vielzahl von zylindrischen Batteriezellen 70 untergebracht ist. Die zylindrischen Batteriezellen 70 sind innerhalb des Modulkörpers 68 matrixartig angeordnet bzw. miteinander verschaltet und werden im Betrieb mit nichtleitender Kühlflüssigkeit, die dem Modulkörper 68 bzw. einem darin vorgesehenen Flüssigkeitsleitsystem 72, das eine Anordnung innenliegender (und damit in der Darstellung von Fig. 3 nicht sichtbarer) Leitwände, Kanäle und dergleichen umfasst, über die fluidische Kommunikationsverbindung 52b seitens des fahrzeugseitigen Betriebssystems 54 zugeführt wird, umspült. Die einzelnen Batteriemodule 66 sind zusätzlich innerhalb eines Modulgehäuses 74 flüssigkeitsdicht gekapselt (siehe Fig. 2). Die Modulgehäuse 74 bestehen aus im Spritzgussverfahren verarbeiteten Kunststoff. Vorliegend weist jede der torusförmigen Batterieeinheiten 44 vier als Quadranten ausgebildete Batteriemodule 66 auf, es kann sich jedoch auch abhängig vom Durchmesser der torusförmigen Batterieeinheiten 44 um eine beliebige andere Anzahl handeln.

Wie weiterhin in Fig. 2 und 3 zu sehen ist, weisen die Batteriemodule 66 an ihren radial zugewandten Stirnseiten 76, 78 komplementär ausgebildete Modulschnittstellen 80, 82 zur gegenseitigen Montage sowie zur Herstellung einer elektrischen und fluidischen Kommunikationsverbindung untereinander auf. Durch Lösen der Modulschnittstellen 80, 82 ist ein unkomplizierter Austausch einzelner, gegebenenfalls defekter Batteriemodule 66 möglich. Die Modulschnittstellen 80, 82 sind als Steck-Rast-Verbinder ausgebildet, die mittels (nicht gezeigter) mechanischer Montagemittel zusätzlich gesichert werden. Jede der Modulschnittstellen 80, 82 umfasst eine Anordnung aus Steckkontakten 84 zur elektrischen Leistungs- und/oder Datenübertragung sowie aus flüssigkeitsdichten Kupplungselementen 86 zur Übertragung der in dem Kühlmittelkreislauf zirkulierenden Kühlflüssigkeit.

Zur Vergrößerung der Ladekapazität des batterieelektrischen Systems 10 sind beispielsgemäß zwei torusförmige Batterieeinheiten 44 für jedes der beiden Hinterräder des landwirtschaftlichen Traktors 24 vorhanden. Die beiden torusförmigen Batterieeinheiten 44 sind entlang der Radfelgenachse 88, also entlang ihrer axialen Erstreckung nebeneinander in Form eines Batteriestapels 90 angeordnet (siehe Fig. 1). Diese weisen komplementär ausgebildete Batterieschnittstellen 92, 94 zur gegenseitigen Montage sowie zur Herstellung einer elektrischen und fluidischen Kommunikationsverbindung untereinander auf. Die sich durch im Felgenteller 16 ausgebildete Ausnehmungen 96 erstreckenden Batterieschnittstellen 92, 94 sind ähnlich den Modulschnittstellen 80, 82 als Steck-Rast-Verbinder ausgebildet. Eine zusätzliche mechanische Sicherung kann aufgrund der vorhandenen Befestigung am Felgenteller 16 bzw. Felgenkranz 14 entfallen, denn diese hält die torusförmigen Batterieeinheiten 44in fester Position zueinander. Indes umfasst jede der Batterieschnittstellen 92, 94 ihrerseits eine Anordnung aus Steckkontakten 98 zur elektrischen Leistungsund/oder Datenübertragung sowie aus flüssigkeitsdichten Kupplungselementen 100 zur Übertragung der in dem Kühlmittelkreislauf zirkulierenden Kühlflüssigkeit.

Die aus Gründen einer vereinfachten Leitungsführung in eine jeweilige gemeinsame Baugruppe integrierten Modul- bzw. Batterieschnittstellen 80, 82, 92, 94 (siehe Fig. 3) ermöglichen neben einer Einbindung in den Kühlmittelkreislauf der Flüssigkeitskühleinrichtung 56 bzw. der Herstellung einer elektrischen Verbindung mit dem Energieversorgungs- und/oder Lademanagementsystem 58 des batterieelektrischen Systems 10 insbesondere auch einen Datenaustausch der Batteriemodule 66 bzw. torusförmigen Batterieanordnungen 44 untereinander.

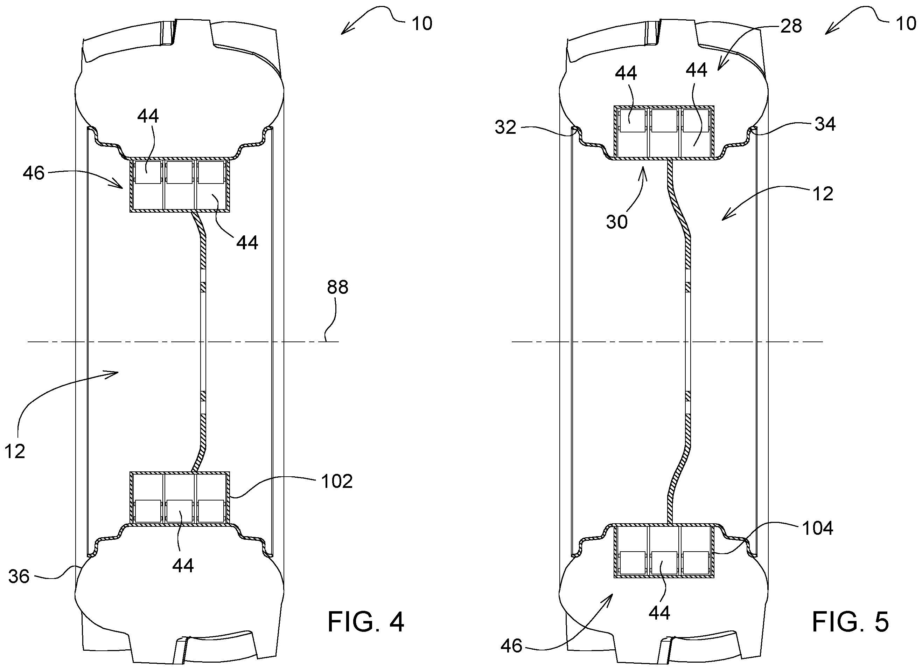

In Fig. 4 ist eine erste Variante des in Fig. 1 dargestellten batterieelektrischen Systems 10 gezeigt, bei der neben den beiden torusförmige Batterieanordnungen 44 eine weitere vorhanden ist, wobei diese zusätzlich von einem schützenden Systemgehäuse 102 umgeben sind, das zugleich integraler Bestandteil einer tragenden Felgenstruktur ist. Aus Gründen der Stabilität besteht das mehrteilig aufgebaute Systemgehäuse 102 wie auch der übrige Felgenkörper vorliegend aus Stahlblech, das im Tiefzugverfahren geformt ist.

Fig. 5 gibt ferner eine zweite Variante des in Fig. 1 dargestellten batterieelektrischen Systems 10 wieder. Hier verlaufen die torusförmigen Batterieanordnungen 44 entlang des Außenumfangs 28 der Radfelge 12, genauer gesagt des von den Felgenhörnern 32, 34 umgrenzten Felgenbetts 30. Bei dem zur Unterbringung der torusförmigen Batterieanordnungen 44 genutzten Leer- bzw. Freibereich 46 handelt es sich in diesem Fall um ein durch das Felgenbett 30 bzw. den darauf montierten Fahrzeugreifen 36 umgrenztes Reifenluftvolumen. Ein Systemgehäuse 104 umspannt das Felgenbett 30 und dient zugleich als stützender Ring für den Fall eines defektbedingt auftretenden Reifendruckverlusts (sog. Runflat-System).

Um einen Ausbau bzw. Austausch der torusförmigen Batterieeinheiten 44 zu ermöglichen, ist das jeweilige Systemgehäuse 102, 104 bei beiden Varianten abnehmbar am Felgenkörper montiert.

## Patentansprüche

1. Batterieelektrisches System für ein Nutzfahrzeug, insbesondere einen landwirtschaftlichen Traktor, umfassend eine Radfelge (12) sowie wenigstens eine in einem Leer- bzw. Freibereich (46) der Radfelge (12) untergebrachte torusförmige Batterieanordnung (44), wobei die wenigstens eine torusförmige Batterieanordnung (44) in einem zur Anbringung an einer Fahrzeugachse (22) ausgebildeten Befestigungsbereich (18) eine Schnittstelle (50) zur lösbaren Herstellung einer drehungsunabhängigen elektrischen und fluidischen Kommunikationsverbindung (52a, 52b) mit einem fahrzeugseitigen Betriebssystem (54) aufweist.

2. Batterieelektrisches System nach Anspruch 1, **dadurch gekennzeichnet, dass** die wenigstens eine torusförmige Batterieanordnung (44) aus einer Aneinanderreihung einer Vielzahl von als Ringsegmente ausgebildeten Batteriemodulen (66) besteht.

3. Batterieelektrisches System nach Anspruch 2, **dadurch gekennzeichnet, dass** die Batteriemodule (66) an ihren radial zugewandten Stirnseiten (76, 78) komplementär ausgebildete Modulschnittstellen (80, 82) zur gegenseitigen Montage sowie zur Herstellung einer elektrischen und fluidischen Kommunikationsverbindung untereinander aufweisen.

4. Batterieelektrisches System nach wenigstens einem der vorhergehenden Ansprüche, **dadurch gekennzeichnet, dass** entlang der Radfelgenachse (88) mindestens zwei torusförmige Batterieanordnungen (44) nebeneinander in Form eines Batteriestapels (90) angeordnet sind, wobei diese komplementär ausgebildete Batterieschnittstellen (92, 94) zur Herstellung einer elektrischen und fluidischen Kommunikationsverbindung untereinander aufweisen.

5. Batterieelektrisches System nach wenigstens einem der vorhergehenden Ansprüche, **dadurch gekennzeichnet, dass** die wenigstens eine torusförmige Batterieanordnung (44) entlang eines Außenumfangs (28) der Radfelge (12), insbesondere eines von zugehörigen Felgenhörnern (32, 34) umgrenzten Felgenbetts (30), das der Montage eines Fahrzeugreifens (36) dient, verläuft.

6. Batterieelektrisches System nach wenigstens einem der vorhergehenden Ansprüche, **dadurch gekennzeichnet, dass** die wenigstens eine torusförmige Batterieanordnung (44) entlang eines Innenumfangs (42) der Radfelge (12) verläuft.

7. Batterieelektrisches System nach wenigstens einem der vorhergehenden Ansprüche, **dadurch gekennzeichnet, dass** die wenigstens eine torusförmige Batterieanordnung (44) entlang eines Innenumfangs (42) der Radfelge (12) derart angeordnet ist, dass diese von außen zugänglich ist.

8. Batterieelektrisches System nach wenigstens einem der vorhergehenden Ansprüche, **dadurch gekennzeichnet, dass** ein Systemgehäuse (102, 104) der wenigstens einen torusförmigen Batterieanordnung (44) zugleich integraler Bestandteil einer tragenden Felgenstruktur ist.

9. Batterieelektrisches System nach Anspruch 8, **dadurch gekennzeichnet, dass** das Systemgehäuse (102, 104) abnehmbar am Felgenkörper montiert ist.

## Claims

1. Battery-electric system for a utility vehicle, in particular an agricultural tractor, comprising a wheel rim (12) and at least one toroidal battery arrangement (44) that is accommodated in an empty or free region (46) of the wheel rim (12), wherein the at least one toroidal battery arrangement (44) has, in a fastening region (18) that is designed for attachment to a vehicle axle (22), an interface (50) for releasably establishing a rotationindependent electrical and fluidic communication connection (52a, 52b) to a vehicle-based operating system (54).

2. Battery-electric system according to Claim 1, **characterized in that** the at least one toroidal battery arrangement (44) consists of a concatenation of a multiplicity of battery modules (66) designed as ring segments.

3. Battery-electric system according to Claim 2, **characterized in that** the battery modules (66), at their end sides (76, 78) facing one another radially, have complementarily designed module interfaces (80, 82) for fitting together and for establishing an electrical and fluidic communication connection between them.

4. Battery-electric system according to at least one of the preceding claims, **characterized in that**, along the wheel-rim axis (88), at least two toroidal battery arrangements (44) are arranged adjacent to one another in the form of a battery stack (90), wherein said battery arrangements have complementarily designed battery interfaces (92, 94) for establishing an electrical and fluidic communication connection between them.

5. Battery-electric system according to at least one of the preceding claims, **characterized in that** the at least one toroidal battery arrangement (44) extends along an outer circumference (28) of the wheel rim (12), in particular of a rim well (30) which is bordered by associated rim flanges (32, 34) and which serves for the installation of a vehicle tyre (36).

6. Battery-electric system according to at least one of the preceding claims, **characterized in that** the at least one toroidal battery arrangement (44) extends along an inner circumference (42) of the wheel rim (12).

7. Battery-electric system according to at least one of the preceding claims, **characterized in that** the at least one toroidal battery arrangement (44) is arranged along an inner circumference (42) of the wheel rim (12) so as to be accessible from the outside.

8. Battery-electric system according to at least one of the preceding claims, **characterized in that** a system housing (102, 104) of the at least one toroidal battery arrangement (44) is at the same time an integral constituent part of a load-bearing rim structure.

9. Battery-electric system according to Claim 8, **characterized in that** the system housing (102, 104) is installed removably on the rim body.

## Revendications

1. Système électrique à batterie pour un véhicule utilitaire, en particulier un tracteur agricole, comprenant une jante de roue (12) ainsi qu'au moins un ensemble batterie (44) en forme de tore logé dans une zone vide ou libre (46) de la jante de roue (12), l'au moins un ensemble batterie (44) en forme de tore comportant dans une zone de fixation (18) formée pour l'installation sur un essieu de véhicule (22) une interface (50) destinée à établir de manière amovible une connexion de communication (52a, 52b) électrique et fluidique indépendante de la rotation avec un système d'exploitation (54) côté véhicule.

2. Système électrique à batterie selon la revendication 1, **caractérisé en ce que** l'au moins un ensemble batterie (44) en forme de tore est constitué d'une juxtaposition d'une pluralité de modules de batterie (66) formés comme des segments annulaires.

3. Système électrique à batterie selon la revendication 2, **caractérisé en ce que** les modules de batterie (66) comportent, sur leurs faces frontales (76, 78) tournées radialement, des interfaces de modules (80, 82) formées de manière complémentaire pour le montage mutuel ainsi que pour l'établissement d'une connexion électrique et fluidique entre elles.

4. Système électrique à batterie selon au moins l'une des revendications précédentes, **caractérisé en ce que** au moins deux ensembles batterie (44) en forme de tore sont disposés côté à côte sous la forme d'un empilement de batteries (90) le long de l'axe (88) de jante, ceux-ci comportant des interfaces de batterie (92, 94) formées de manière complémentaire pour l'établissement d'une connexion électrique et fluidique entre elles.

5. Système électrique à batterie selon au moins l'une des revendications précédentes, **caractérisé en ce que** l'au moins un ensemble batterie (44) en forme de tore s'étend le long d'une périphérie extérieure (28) de la jante de route (12), en particulier d'une base de jante (30) bordée par des rebords de jante (32, 34) associés, lequel sert au montage d'un pneu (36) de véhicule.

6. Système électrique à batterie selon au moins l'une des revendications précédentes, **caractérisé en ce que** l'au moins un ensemble batterie (44) en forme de tore s'étend le long d'une périphérie intérieure (42) de la jante de roue (12).

7. Système électrique à batterie selon au moins l'une des revendications précédentes, **caractérisé en ce que** l'au moins un ensemble batterie (44) en forme de tore est disposé le long d'une périphérie intérieure (42) de la jante de roue (12) de telle manière qu'il est accessible de l'extérieur.

8. Système électrique à batterie selon au moins l'une des revendications précédentes, **caractérisé en ce qu'**un boîtier de système (102, 104) de l'au moins un ensemble batterie (44) en forme de tore fait en même temps partie intégrante d'une structure de jante de support.

9. Système électrique à batterie selon la revendication 8, **caractérisé en ce que** le boîtier de système (102, 104) est monté sur le corps de jante de manière à pouvoir être retiré.
